# EUROPÄISCHE PATENTANMELDUNG

(11) **EP 2 374 681 A1**
(43) Veröffentlichungstag der Anmeldung: **12.10.2011**
(21) Anmeldenummer: 10003869.4
(22) Anmeldetag: 12.04.2010
(51) Int. Cl.: B61C 11/00, B62D 57/04

(54) **Vorrichtung für Fahrzeuge und Verfahren zum Betrieb eines Fahrzeugs**

(71) Anmelder: Gernert, Herbert, 81475 München (DE)
(72) Erfinder: Gernert, Herbert, 81475 München (DE)
(74) Vertreter: Heim, Hans-Karl

(57) **Zusammenfassung**

Die Erfindung betrifft ein Fahrzeug mit einer Vorrichtung zur Nutzung der Luftströmung in einem Strömungskanal bei Fahrzeugen durch Verwendung von linear wirkenden Rotoren, welche die auf das Fahrzeug wirkende Schwerkraft durch die Magnuskraft, je nach Rotationsrichtung, mindern oder erhöhen und somit bei entsprechender Vortriebskraft eine geschwindigkeitserhöhende oder -mindernde Wirkung erzeugen.

## Beschreibung

Die Erfindung betrifft ein Fahrzeug gemäß Oberbegriff des Anspruches 1 und ein Verfahren gemäß Oberbegriff des Anspruches 11.

Es ist heute allgemein die vorherrschende Meinung, dass in Zukunft ein erheblicher Anteil des Energiebedarfs durch erneuerbare Energien, wie Windkraft, Solarenergie und Biogas, gedeckt werden muss. Diese erneuerbaren Energien haben bereits zur Entwicklung neuer fortschrittlicher Technologien geführt. Es werden in großen Umfang Windkraftanlagen in windreichen Gegenden an Land und auf See in Europa, USA und in den sich industriell entwickelnden Staaten, wie Indien und China, gebaut.

Neben den bereits für Windparks ausgereiften Windmühlen gibt es neuere patentierte Vorschläge zur Nutzung der Windenergie durch Anwendung des Magnuseffekts. Anzuführen sind zum Beispiel die Patentanmeldung DE 10 2004 046 652 A1 aus dem Jahr 2004 und die internationale Patentanmeldung WO 2007/076825 A1 aus dem Jahr 2006 mit einer deutschen Priorität von 2005. Beide Patente beschäftigen sich mit der Umsetzung der linearen Magnuskraft in eine rotierende Kraft zur Erzeugung elektrischer Energie mittels Generatoren. Beide Verfahren sind bis heute nicht in großtechnischen Anlagen umgesetzt.

Die älteste Anwendung des Magnus-Effekts ist der sogenannte Flettner-Rotor, zum Patent angemeldet bereits im Jahr 1924. Er wurde eingebaut in Frachtschiffen und in einem Forschungsschiff von Jacques-Yves Cousteau, wobei zwei Flettner-Rotoren 25 - 30% der Antriebsenergie lieferten. Weitere Anwendungen im Schiffbau wurden nicht verfolgt, da der Kraftstoffpreis zu dieser Zeit zu niedrig war und damit keine bessere Wirtschaftlichkeit erreicht werden konnte.

Die Verwendung von Flettner-Rotoren ist auch bei Flugzeugen bekannt. Fahrzeuge mit Flettner-Rotoren, wie Schiffe, weisen mindestens einen Rotationszylinder auf, welcher um seine Längsachse drehbar gelagert ist. Ferner ist mindestens eine Antriebseinrichtung zur Rotation des mindestens einen Rotationszylinders vorgesehen.

Der Erfindung liegt die **Aufgabe** zugrunde, bei Fahrzeugen fossile oder elektrische Energie einzusparen, oder bei gegebener Antriebsenergie die Geschwindigkeit des Fahrzeugs zu steigern oder zu erniedrigen. Die Anwendung der Erfindung kann bei nahezu allen Fahrzeugtypen, wie Straßen-, Schienen-, Schwebe- und Geländefahrzeugen, insbesondere wenn sie höhere Geschwindigkeiten erreichen, zum Einsatz kommen.

Die Aufgabe wird durch ein Fahrzeug mit den Merkmalen des Anspruchs 1 sowie durch ein Verfahren zum Betrieb eines Fahrzeuges mit den Merkmalen des Anspruchs 11 gelöst.

Weitere vorteilhafte Ausführungsformen sind in den abhängigen Ansprüchen, der Beschreibung sowie den Figuren und deren Beschreibung angegeben.

Zur Lösung dieser Aufgabe wird die bereits im neunzehnten Jahrhundert von Prof. Magnus entdeckte Magnuskraft, welche im Lehrbuch für Physik von Grimsehl detailliert beschrieben ist, eingesetzt. Die Magnuskraft entsteht an einem rotierenden Zylinder, der vom Wind angeströmt wird, im rechten Winkel zur Windrichtung. Durch Änderung der Rotationsrichtung des Zylinders ändert sich auch die Magnuskraft um 180°.

Die vorliegende Erfindung kann in einem rechteckigen oder wannenförmigen und vorzugsweise dem Strömungsverlauf angepassten Strömungskanal, in dem die Rotoren waagrecht hintereinander angeordnet sind und zum Beispiel von Windrädern, Windturbinen oder vorzugsweise Elektromotoren angetrieben werden, gesehen werden. Der Kanal ist kraftschlüssig mit dem Fahrzeug verbunden. Man erhält bei einer Luftströmung, die entgegen der Fahrtrichtung des Fahrzeugs gerichtet ist, mit Rechtsrotation der Rotoren eine entgegen der Schwerkraft wirkende Kraft, so dass bei konstantem Einsatz von Energie eine Steigerung der Geschwindigkeit erreicht wird und umgekehrt bei konstanter Geschwindigkeit durch die Wirkung der Magnuskraft eine Einsparung an Energie möglich ist. Bei Linksrotation der Rotoren wirkt die Magnuskraft zusätzlich zur Schwerkraft und führt zu einer Verringerung der Fahrtgeschwindigkeit und somit bei Einsatz der Bremsanlagen zu einer Verstärkung der gesamten Bremskraft. Ein Effekt, der speziell bei Schienen- und Schwebefahrzeugen wie zum Beispiel ICE und Transrapid interessant ist.

Aus strömungstechnischen Gründen soll die Luftströmung laminar sein. Dazu ist es erforderlich, dass die Rotationsgeschwindigkeit an der Oberfläche des Zylinders im Bereich der Strömungsgeschwindigkeit der Luftströmung liegt. An beiden Enden der Rotationszylinder werden kreisrunde Scheiben angebracht, um Wirbelbildungen zu verhindern. Derartige Rotoren bezeichnet man üblicherweise als Flettner-Rotoren. Die Flettner-Rotoren sind in dem Strömungskanal hintereinander angeordnet. Zur Vermeidung von Wirbelbildungen werden, falls erforderlich, Luftleitbleche und/oder Gitter zwischen den Rotoren positioniert. Der Strömungskanal kann im Boden- und/oder Dachbereich des Fahrzeugs angebracht werden und ist entweder offen oder begrenzt durch Öffnungsklappen. Bei längeren Schienen- oder Schwebefahrzeugen, wie ICE oder Transrapid, wird man über die Länge des Zuges, falls erforderlich, Öffnungsklappen für die Luftzufuhr anbringen.

Ein Grundgedanke der Erfindung kann darin gesehen werden, mindestens einen Rotationszylinder in einem am oder im Fahrzeug vorgesehenen Luftleitkanal zu platzieren, wobei die Längsachse des mindestens einen Rotationszylinders im Wesentlichen quer zu einer Hauptbewegungsrichtung des Fahrzeugs und etwa parallel zur Fahrebene des Fahrzeuges ausgerichtet ist.

Durch eine derartige Ausrichtung des Rotationszylinders, welcher auch als Flettner-Rotor bezeichnet werden kann, ist es möglich, den Magnuseffekt einzusetzen, um eine Kraft, welche entgegen der Schwerkraft wirkt, zu erzeugen. Ebenfalls ist es möglich, den Magnuseffekt zu verwenden, um eine Kraft zu erzeugen, welche in derselben Richtung wie die Schwerkraft wirkt. Die durch den Magnuseffekt erzeugte Kraft wird als Magnuskraft bezeichnet. Die Richtung der Magnuskraft ist abhängig von der Rotationsrichtung der Rotationszylinder.

Grundsätzlich kann der Luftleitkanal beliebig ausgeführt sein. Er kann beispielsweise offen ausgeführt sein und hierbei insbesondere einen wannenförmigen Querschnitt aufweisen. In einer anderen Ausführungsform ist er geschlossen ausgeführt und weist beispielsweise einen im Wesentlichen rechteckigen Querschnitt auf. Grundsätzlich sind auch andere Querschnitte möglich. Die genaue Auslegung des Luftleitkanals, ob offen oder geschlossen und mit welchem Querschnitt, ist abhängig vom exakten Anwendungsgebiet sowie der Form, der Art und/oder der Durchschnittsreisegeschwindigkeit des Fahrzeuges, an dem der Luftleitkanal angeordnet ist.

Bevorzugt ist eine Innenseite des Luftleitkanals wellenförmig an die Luftströmung angepasst. Die Luftströmung tritt bevorzugt an einem vorderen Bereich des Luftleitkanals ein, durchströmt den Kanal und tritt in einem hinteren Bereich des Luftleitkanals aus. Durch eine wellenförmige Auslegung einer Innenseite des Luftleitkanals kann die Anströmung der Rotationszylinder im Luftleitkanal beeinflusst werden. Hierdurch ist eine möglichst wirkungsvolle Erzeugung der Magnuskraft möglich. Abhängig von der exakten Montageposition des Luftleitkanals an oder im Fahrzeug kann die Ober- und/oder Unterseite wellenförmig ausgebildet sein.

Die mindestens eine Antriebseinrichtung, die zum Rotieren der Rotationszylinder verwendet wird, kann bevorzugt einen Propeller, ein Windrad, eine Windturbine und/oder einen Elektromotor aufweisen. Der Propeller, das Windrad und/oder die Windturbine können ebenfalls in dem Luftleitkanal angeordnet sein, und durch die durch den Kanal strömende Luft Energie erzeugen, mit der die Rotationszylinder in Rotation versetzt werden. Es ist auch möglich, für den Propeller, das Windrad und/oder die Windturbine einen weiteren, separaten Luftleitkanal vorzusehen. Bei der Realisierung der Erfindung im Zusammenhang mit einem Schienenfahrzeug, welches elektrisch betrieben wird, kann die durch die Abnehmer abgenommene Energie auch zum Antrieb eines Elektromotors eingesetzt werden, der die Rotationszylinder antreibt.

In einer bevorzugten Ausführungsform sind mindestens zwei Rotationszylinder vorgesehen und zwischen den Rotationszylindern sind Gitter, Siebe und/oder Luftleitbleche zum Erzeugen eines im Wesentlichen laminaren Luftstroms angeordnet. Eine laminare Luftströmung auf einem Rotationszylinder hat den Vorteil, dass der Magnuseffekt mit guter Ausprägung und mit einem guten Wirkungsgrad erzeugt werden kann. Grundsätzlich sind auch andere Mittel geeignet, um Luftverwirbelungen in dem Luftleitkanal zu verringern.

Vorteilhaft ist es, wenn der Luftleitkanal einseitig und/oder beidseitig verschließbar ausgebildet ist. Ferner können am Luftleitkanal Steuerungseinrichtungen, insbesondere Öffnungsklappen für die Luftzufuhr, vorgesehen sein. Durch derartige Vorrichtungen sowie die Verschließbarkeit des Luftleitkanals kann zum einen die Luftströmung in dem Luftleitkanal beeinflusst werden. Zum anderen ist es auch möglich, den Luftleitkanal komplett zu schließen, so dass keine Luft durch den Luftleitkanal strömt. Dies ist beispielsweise bei geringen Geschwindigkeiten des Fahrzeuges bevorzugt, da dann der Magnuseffekt nur gering ausgeprägt ist.

Der Luftleitkanal kann sich zumindest über Teilbereiche oder über die gesamte Länge des Fahrzeuges erstrecken. Das Fahrzeug kann beispielsweise für eine Fahrtrasse, eine Straße, für die Schiene oder als Schwebefahrzeug, insbesondere als Magnetschwebebahn, ausgeführt sein. Speziell bei der Verwendung in Magnetschwebebahnen besteht der Vorteil, dass diese konstruktionsgemäß so geführt sind, dass bei einem Wirken der Magnuskraft entgegen der Schwerkraft nicht die Gefahr besteht, dass das Fahrzeug ungewollt abhebt.

Bei einem Verfahren zum Betrieb eines erfindungsgemäßen Fahrzeuges wird zum Erzeugen einer Magnuskraft, welche entgegen der Schwerkraft gerichtet ist, der mindestens eine Rotationszylinder in Rotation versetzt. Außerdem strömt Luft aufgrund der Bewegung des Fahrzeuges in einer Bewegungsrichtung durch den Luftleitkanal entgegen der Bewegungsrichtung auf den mindestens einen Rotationszylinder. Der mindestens eine Rotationszylinder wird in einem untergrundnahen Bereich in Bewegungsrichtung des Fahrzeuges gedreht, wobei er sich in einem untergrundfernen Bereich entgegen der Bewegungsrichtung des Fahrzeuges dreht. Als untergrundnaher Bereich wird hierbei der Bereich des Rotationszylinders angesehen, welcher sich näher zur Straße oder Schiene befindet, auf der sich das Fahrzeug bewegt, als der untergrundferne Bereich. In diesem Zusammenhang kann auch von einem unteren Bereich und einem oberen Bereich des Zylinders gesprochen werden.

In entgegengesetzter Weise wird zum Erzeugen einer Magnuskraft, welche in Richtung der Schwerkraft ausgerichtet ist, mindestens ein Rotationszylinder in Rotation versetzt, wobei der mindestens eine Rotationszylinder in einem untergrundnahen Bereich entgegen der Bewegungsrichtung des Fahrzeuges gedreht wird, wodurch er sich in einem untergrundfernen Bereich in die Bewegungsrichtung des Fahrzeuges dreht.

Durch eine derartige Drehung des Zylinders kann entweder eine Magnuskraft erzeugt werden, die entgegen der Schwerkraft oder in Richtung der Schwerkraft gerichtet ist. Bevorzugt wird das Erzeugen einer Magnuskraft, welche entgegen der Richtung der Schwerkraft ausgerichtet ist, in einer Beschleunigungsphase und/oder Hochgeschwindigkeitsphase des Fahrzeuges durchgeführt. Hierdurch wird die Gewichtskraft des Fahrzeuges verringert und so weniger Energie zur Beschleunigung beziehungsweise zum Aufrechterhalten der hohen Geschwindigkeit benötigt.

In analoger Weise wird das Erzeugen der Magnuskraft, welche mit der Schwerkraft ausgerichtet ist, in einer Verzögerungsphase des Fahrzeuges durchgeführt. Hierdurch wird die Gewichtskraft des Fahrzeuges erhöht und somit die Bremswirkung optimiert.

Die Erfindung wird nachfolgend anhand von Ausführungsbeispielen und schematischen Zeichnungen näher erläutert. In diesen Zeichnungen zeigen:
- Fig. 1: eine Skizze zum Verdeutlichen des Prinzips zum Erzeugen einer Magnuskraft, welche gegen die Schwerkraft ausgerichtet ist;
- Fig. 2: eine Skizze zum Verdeutlichen des Prinzips zum Erzeugen einer Magnuskraft, welche in Richtung der Schwerkraft ausgerichtet ist;
- Fig. 3: eine vertikale Schnittansicht entlang einer Bewegungsrichtung eines Fahrzeuges durch einen Luftleitkanal gemäß der Erfindung;
- Fig. 4: eine vertikale Schnittansicht quer zur Bewegungsrichtung eines Fahrzeuges durch einen Luftleitkanal gemäß der Erfindung im Bereich eines Rotationszylinders; und
- Fig. 5: eine vertikale Schnittansicht entlang einer Bewegungsrichtung eines Fahrzeuges durch einen Luftleitkanal mit wellenförmig ausgebildeter Innenwand.

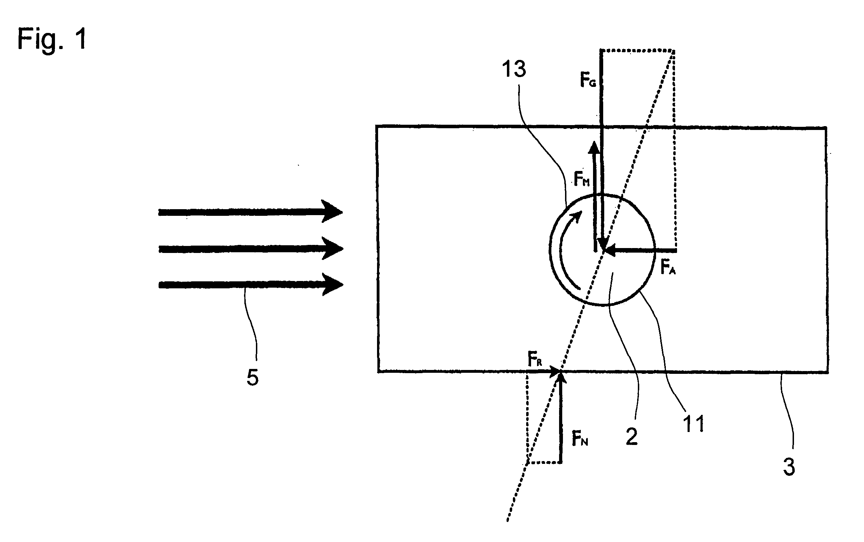

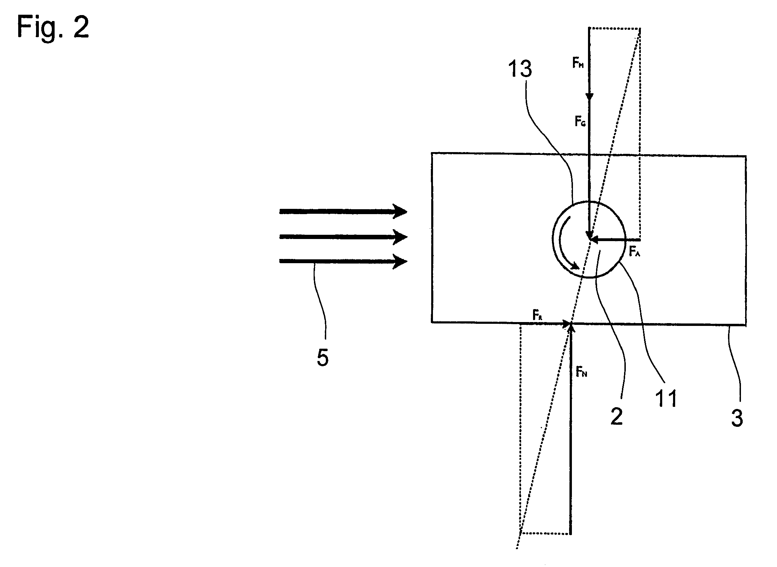

In den Figuren 1 und 2 mit den Zuständen rechtsdrehender und linksdrehender Flettner-Rotoren 2 ist das erfindungsgemäße Prinzip der Anwendung des Magnus-Effekts an Fahrzeugen durch den Einsatz von Flettner-Rotoren 2, die waagrecht in einem Strömungskanal 3 gelagert sind, dargestellt. Der Strömungskanal 3 ist mit dem Fahrzeug kraftschlüssig verbunden. Das Fahrzeug wird durch einen Motor angetrieben und die Luftströmung 5 wirkt in der Gegenrichtung der Antriebskraft F_{A}. Bei Rechtsrotation des Flettner-Rotors 2 (Fig. 1 ) erhält man eine senkrecht nach oben gerichtete Magnuskraft F_{M}, die entgegen der Schwerkraft F_{G} wirkt und damit die Reibungskraft F_{R} verringert. Diese resultierende Kraft bewirkt eine Verminderung der auf das Fahrzeug wirkenden Schwerkraft F_{G} und somit bei gleichem Energieverbrauch des Motors eine Erhöhung der Vortriebskraft, was zu einer Steigerung der Geschwindigkeit des Fahrzeugs führt. Gleichfalls kann man die Geschwindigkeit des Fahrzeugs durch Drosseln der Energiezufuhr konstant halten und erreicht so einen geringeren Energieverbrauch. Schaltet man den rechtsdrehenden Flettner-Rotor 2 auf linksdrehend (Fig. 2) um, bewirkt die Magnuskraft F_{M} eine Verstärkung der Schwerkraft F_{G} und bei gleichzeitigen Betätigen der Bremsanlage des Fahrzeugs eine erhöhte Bremswirkung.

In den Figuren 1 und 2 stehen die Abkürzungen F_{G} für Gewichtskraft, F_{A} für Antriebskraft, F_{M} für Magnuskraft, F_{R} für Reibungskraft und F_{N} für Normalkraft.

Im Zusammenhang mit einem rechtsdrehenden Flettner-Rotor 2 wird in Bezug auf die Figuren 1 und 2 ein Flettner-Rotor 2 bezeichnet, der sich in der Schnittebene im Uhrzeigersinn dreht. Hierbei dreht sich ein untergrundnaher Bereich 11 des Flettner-Rotors 2 innerhalb eines Luftleitkanals 3 gegen den Luftstrom 5. Dies bedeutet, der Flettner-Rotor 2 dreht sich in Richtung der Antriebskraft F_{A}. Diese Richtung entspricht der Fahrtrichtung.

Analog wird mit einem linksdrehenden Flettner-Rotor 2 ein Flettner-Rotor 2 bezeichnet, welcher sich in der Schnittebene gegen den Uhrzeigersinn dreht. Dies bedeutet, dass sich der Flettner-Rotor 2 in einem untergrundnahen Bereich 11 mit der Luftströmung 5 dreht, wohingegen er in dem untergrundfernen Bereich 13 gegen die Luftströmung 5 gedreht wird.

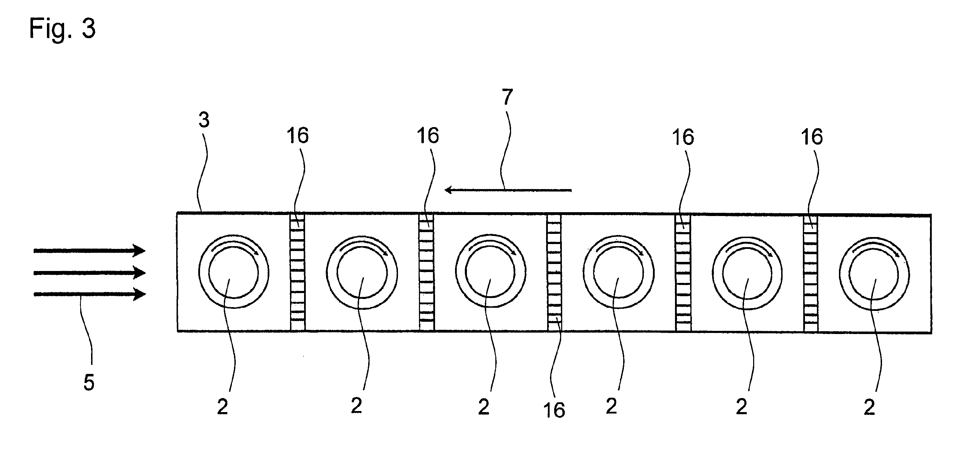

In Fig. 3 sind erfindungsgemäß in einem längeren Strömungskanal 3 eine größere Anzahl von Flettner-Rotoren 2 waagrecht angeordnet. Hierbei ist die Luftströmung 5 wiederum entgegen der Bewegungsrichtung 7 des Fahrzeuges ausgebildet. Um eine möglichst laminare Strömung in einem derartigen Kanal 3, der auch als Luftleitkanal, Windkanal oder Luftkanal bezeichnet werden kann, zu erreichen, ist es zweckmäßig, zwischen den einzelnen Rotoren 2 Gitter, Siebe oder Luftleitbleche 16 zu positionieren. Der Abstand zwischen den Rotoren 2 sollte gleich oder größer als der Durchmesser des Rotors 2 sein. Die Rotationsgeschwindigkeit des Flettner-Rotors 2 ist der Strömungsgeschwindigkeit der Luft im Kanal 3 anzupassen, so dass an der Oberfläche des Rotors 2 möglichst gleiche Geschwindigkeiten herrschen. Ein Antriebsmotor der Rotoren kann durch Windräder, Windturbinen oder Propeller in einem zweiten Windkanal ersetzt werden. Es ist eventuell zweckmäßig, dass man den Strömungskanal 3 einseitig oder beidseitig schließen kann. Ist der Strömungskanal 3 sehr lang, kann man Lüftungsklappen anbringen, um eine gleichmäßige Strömungsgeschwindigkeit der Luft über die ganze Länge zu erreichen.

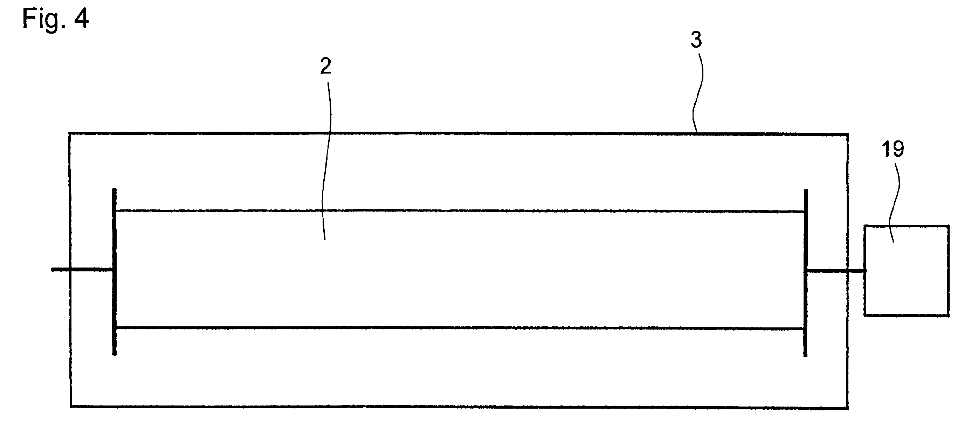

Fig. 4 zeigt einen vertikalen Querschnitt quer zur Bewegungsrichtung eines Fahrzeuges eines Luftleitkanals 3 mit einem Flettner-Rotor 2. Außerhalb des Luftleitkanals 3 befindet sich beispielsweise ein Motor 19 zum Antrieb des Flettner-Rotors 2.

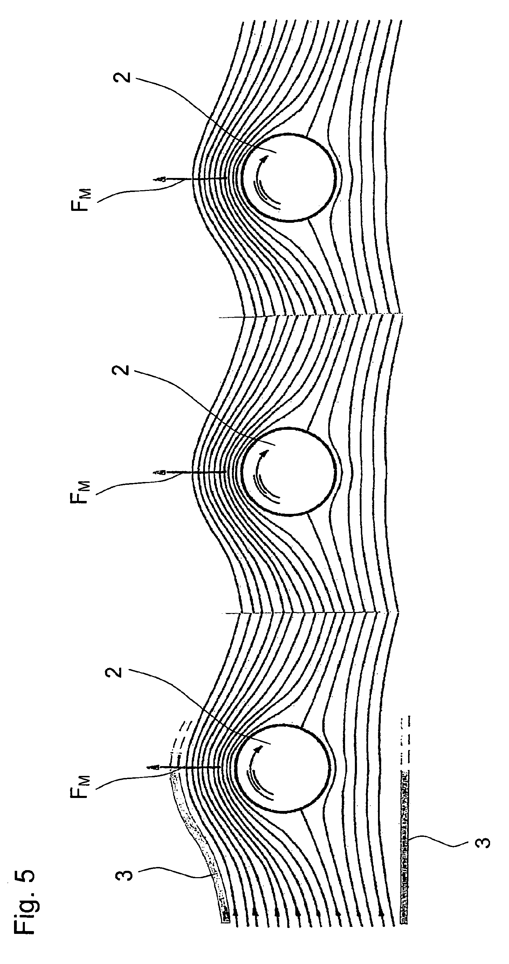

In Fig. 5 ist der Strömungsverlauf in einem erfindungsgemäßen, entsprechend dem Verlauf der Strömung geformten Strömungskanal 3 mit waagrecht angeordneten Flettner-Rotoren dargestellt. Diese Form des Strömungskanals 3 kann vorzugsweise gewählt werden, da es dann möglich ist, auf Gleichrichter 16 in Form von Gittern und/oder Sieben zur Vermeidung von Verwirbelungen zu verzichten. Die Form der Unterseite kann eine Gerade sein und die Oberseite, wie in Fig. 5 dargestellt, wellenförmig.

Die Anwendung der Erfindung ist besonders interessant bei fortschrittlichen Technologien, die Einsparungen an Energien erforderlich machen, wie zum Beispiel Elektroautos, bei denen die Reichweite von Batterieladungen wesentlich erhöht werden kann. Bei modernen Hochgeschwindigkeitszügen, wie ICE oder Transrapid, besteht die Möglichkeit, über die Länge des Zuges eine große Anzahl von Flettner-Rotoren in einem Strömungskanal unterzubringen und damit größere Einspareffekte an Energieeinsatz zu erzielen.

## Patentansprüche

1. Fahrzeug, insbesondere Schienenfahrzeug,
mit mindestens einem Rotations-Zylinder (2),
welcher um seine Längsachse drehbar gelagert ist und
mit mindestens einer Antriebseinrichtung zur Rotation des mindestens einen Rotations-Zylinder (2),
**dadurch gekennzeichnet,**
**dass** der mindestens eine Rotations-Zylinder (2) in einem am oder im Fahrzeug vorgesehenen Luftleitkanal (3) platziert ist,
wobei die Längsachse des mindestens einen Rotations-Zylinders (2) im Wesentlichen quer zu einer Hauptbewegungsrichtung des Fahrzeuges und etwa parallel zur Fahrebene des Fahrzeuges ausgerichtet ist.

2. Fahrzeug nach Anspruch 1,
**dadurch gekennzeichnet**,
der Luftleitkanal (3) offen, insbesondere mit wannenförmigem Querschnitt, ausgeführt ist.

3. Fahrzeug nach Anspruch 1,
**dadurch gekennzeichnet,**
**dass** der Luftleitkanal (3) geschlossen, insbesondere mit einem rechteckigen Querschnitt ausgeführt ist.

4. Fahrzeug nach einem der Ansprüche 1 bis 3,
**dadurch gekennzeichnet,**
**dass** eine Innenseite des Luftleitkanals (3) wellenförmig der Luftströmung angepasst ausgebildet ist.

5. Fahrzeug nach einem der Ansprüche 1 bis 4,
**dadurch gekennzeichnet,**
**dass** die mindestens eine Antriebseinrichtung einen Propeller, ein Windrad, eine Windturbine und/oder einen Elektromotor (19) aufweist.

6. Fahrzeug nach einem der Ansprüche 1 bis 5,
**dadurch gekennzeichnet,**
**dass** mindestens zwei Rotations-Zylinder (2) vorgesehen sind und
**dass** zwischen den Rotations-Zylindern (2) Gitter, Siebe und/oder Luftleitbleche (16) zum Erzeugen einer im Wesentlichen laminaren Luftströmung vorgesehen sind.

7. Fahrzeug nach einem der Ansprüche 1 bis 6,
**dadurch gekennzeichnet,**
**dass** der Luftleitkanal (3) einseitig und/oder beidseitig verschließbar ausgebildet ist.

8. Fahrzeug nach einem der Ansprüche 1 bis 7,
**dadurch gekennzeichnet,**
**dass** der Luftleitkanal (3) zumindest über Teilbereiche des Fahrzeuges vorgesehen ist.

9. Fahrzeug nach einem der Ansprüche 1 bis 8,
**dadurch gekennzeichnet,**
**dass** am Luftleitkanal (3) Steuereinrichtungen, insbesondere Öffnungsklappen für die Luftzufuhr, vorgesehen sind.

10. Fahrzeug nach einem der Ansprüche 1 bis 9,
**dadurch gekennzeichnet,**
**dass** das Fahrzeug für eine Fahrtrasse, Straße, Schiene oder als Schwebefahrzeug, insbesondere als Magnetschwebebahn, ausgeführt ist.

11. Verfahren zum Betrieb eines Fahrzeuges nach einer der Ansprüche 1 bis 10, **dadurch gekennzeichnet,**
**dass** zum Erzeugen einer Magnuskraft F_{M}, welche entgegen der Schwerkraft F_{G} gerichtet ist, der mindestens eine Rotations-Zylinder (2) in Rotation versetzt wird, und Luft aufgrund der Bewegung des Fahrzeuges in eine Bewe-
gungsrichtung (7) durch den Luftleitkanal (3) entgegen der Bewegungsrichtung (7) auf den mindestens einen Rotations-Zylinder (2) strömt,
**dass** der mindestens eine Rotations-Zylinder (2) in einem untergrundnahen Bereich (11) in die Bewegungsrichtung (7) des Fahrzeuges gedreht wird, und der mindestens eine Rotations-Zylinder (2) in einem untergrundfernen Bereich (13) entgegen der Bewegungsrichtung (7) des Fahrzeuges gedreht wird.

12. Verfahren nach Anspruch 11,
**dadurch gekennzeichnet,**
**dass** zum Erzeugen einer Magnuskraft F_{M}, welche in Richtung der Schwerkraft F_{G} ausgerichtet ist, der mindestens eine Rotations-Zylinder (2) in Rotation versetzt wird,
**dass** der mindestens eine Rotations-Zylinder (2) in einem untergrundnahen Bereich (11) entgegen der Bewegungsrichtung (7) des Fahrzeuges gedreht wird, und
**dass** der mindestens eine Rotations-Zylinder (2) in einem untergrundfernen Bereich (13) in die Bewegungsrichtung (7) des Fahrzeuges gedreht wird.

13. Verfahren nach Anspruch 11 oder 12,
**dadurch gekennzeichnet,**
**dass** das Erzeugen einer Magnuskraft F_{M}, welche entgegen der Richtung der Schwerkraft F_{G} gerichtet ist, in einer Beschleunigungsphase oder einer Hochgeschwindigkeitsphase des Fahrzeuges durchgeführt wird.

14. Verfahren nach einem der Ansprüche 11 bis 13,
**dadurch gekennzeichnet,**
**dass** das Erzeugen der Magnuskraft F_{G}, welche mit der Schwerkraft F_{G} ausgerichtet ist, in einer Verzögerungsphase des Fahrzeuges durchgeführt wird.
